# EUROPEAN PATENT APPLICATION

(11) **EP 4 822 919 A1**
(43) Date of publication of application: **14.10.2026**
(21) Application number: 25169000.4
(22) Date of filing: 08.04.2025
(51) Int. Cl.: H02B 1/56, H02B 13/045

(54) **SWITCHGEAR PANEL WITH THERMAL BYPASS CHANNEL**

(71) Applicant: ABB SCHWEIZ AG, 5400 Baden (CH)
(72) Inventor: PAULIK, Lukas, 634 00 Brno (CZ); NOVAK, Ondrej, 691 06 Velké Pavlovice (CZ)
(74) Representative: Maiwald GmbH

(57) **Abstract**

The present disclosure relates to a switchgear panel (10) comprising a plurality of compartments (14), each compartment (14) comprises an outer housing (18). At least one thermal bypass channel (22) is provided comprising an inlet (26) and an outlet (30), wherein the inlet (26) and the outlet (30) are fluidically connected to the housing (18) of at least one compartment (14) of the switchgear panel (10), and the inlet (26) is arranged to a region with a higher temperature than the temperature of the region where the outlet (30) is connected to, so that the region at the inlet (26) is cooled by the thermal bypass channel (22).

## Description

### FIELD OF THE INVENTION

The present invention relates a switchgear panel with a plurality of compartments.

### BACKGROUND

Switchgear substation in case of single phase (tubular design concept) is made from several switchgear panels. Each panel consists of three phases. Each phase is enclosed in separated cast aluminium compartments. Aluminium cast compartments have good ability to dissipate heat. But if they are too close to each other their ability too cool themselves down is limited. Some compartments, especially those close to suitable airflow might have much better ability to dissipate heat compared to those that lack sufficient airflow from the outside.

Another issue are low flow velocities inside the compartment, they decrease heat transfer coefficient inside the compartment. Each phase contains several such compartments that are separated by bulk-heads made from aluminium or epoxy. These bulk-heads block possible airflow exchange inside the compartment which is the most effective way to re-distribute heat. In case of epoxy bulk head or other thermally insulating material, heat conduction is severely limited. Therefore, heat distribution in the entire substation can be heavily unequal, especially for panels like incoming feeder panel with high current load versus outgoing feeder panel with minimal or even zero current load and etc.

Unequal distribution of temperature causes local temperature hotspots, increase risk of not passing TRT requirements. This is usually compensated by expansive heat exchanger or even more expansive increase in copper cross section while other compartments have spare ability to dissipate heat that is not being utilized.

WO 2022/229678 A1 describes a technical solution that employs thermoelectric devices to control temperature within switchgear. This solution addresses the challenges of heat generation due to high load currents by enhancing the heat transfer coefficient through improved airflow management. Utilization of the Peltier and Seebeck effects in thermoelectric devices enables both heating and cooling functionalities as needed. The arrangement allows for adaptability to various configurations, ensuring optimized performance based on specific operational conditions. Overall, the approach aims to maintain the temperature of electrical components within acceptable limits, thereby improving the reliability and lifespan of switchgear systems.

### SUMMARY

There may be a need to provide a switchgear panel with which an effective cooling of compartments of the switchgear panel can be achieved.

This need may be met by a switchgear panel having the features of claim 1. Embodiments are specified in the dependent claims.

According to an aspect of the present disclosure a switchgear panel is proposed comprising a plurality of compartments. Each compartment comprises an outer housing, wherein at least one thermal bypass channel is provided comprising an inlet and an outlet. The inlet and the outlet are fluidically connected to the housing of at least one compartment of the switchgear panel, and the inlet is arranged to a region with a higher temperature than the temperature of the region where the outlet is connected to, so that the region at the inlet is cooled by the thermal bypass channel.

A compartment comprises the outer housing in which equipment of the switchgear panel is arranged, which compartment is partly separated from the other compartments. The inlet and outlet of the thermal bypass channel are defined as the parts of the channel, where the fluid flow either enters or exits the thermal bypass channel. The flow direction inside the thermal bypass channel is determined by the thermal flow inside the thermal bypass channel. The thermal flow inside the thermal bypass channel thereby flows from the hotter region at the inlet to the colder region at the outlet. By means of this thermal flow the hotter region is cooled wherein the heat is transported to the colder region. This fluid flow also leads to a fluid flow between the compartments, which also results in a cooling of the hotter regions. Thereby, the temperature in the switchgear panel can be distributed more equally. Further, the hotter region can be cooled effectively by the colder region. The inlet and outlet of the thermal bypass channel are either connected to the same compartment or to different compartments.

In an embodiment of the disclosure, the thermal bypass channel is an integral part of the outer housing. An integral bypass channel has to be understood as a part which is a one-part-piece with the outer housing. With such a design of the bypass channel less space is required for the thermal bypass channel. Further, no assembling step is necessary for mounting the thermal bypass channel to the respective housing of the compartment. Apart from this, the outer housing and the thermal bypass channel can be manufactured together in one step.

In a further embodiment, the thermal bypass channel is integrated to walls of the outer housing. In contrast to the thermal bypass channel providing a certain distance between the channel and the outer housing, this channel forms a part of the walls of the outer housing. In other word, an internal of the compartment and the thermal bypass channel are only separated from each other by a single separation wall. Such an embodiment requires less space, so that a compact switchgear panel can be provided. Apart from this, an assembling step of the thermal bypass channel can be omitted. Overall, such a switchgear panel can be manufactured much more economically.

Advantageously, the inlet and/or the outlet of the thermal bypass channel is connected via flanges to the outer housing of at least one compartment of the switchgear panel. In contrast to the example where the outer housing and the thermal bypass channel is a one-part-piece, in this example the outer housing and the thermal bypass channel form two parts. Each part comprises a flange, so that the thermal bypass channel is attachable to the outer housing via this flange. By means of such a flange arrangement such a thermal bypass channel can be variable attached to the switchgear panel. Flanges of the compartments which are not used are closed via a cover. It is further possible using a thermal bypass channel having a different material as the outer housing of the compartments so that a material can be used having a better heat conduction property than the outer housing. Further, it is also possible using a thermal bypass channel having the best properties with respect to cooling or space requirement for the different intended purposes.

Preferably, a plurality of thermal bypass channels is arranged. In other word, more than one thermal bypass channel is used for one phase of the switchgear panel. With a plurality of thermal bypass channels the temperature inside the switchgear panel can be more equally distributed. Further, by providing more thermal bypass channels the surface area for heat exchange is increased, so that also the cooling effect of the switchgear panel is increased.

In a further advantageous development, at the external side of the thermal bypass channel at least one heatpipe is arranged. By means of a heatpipe the cooling effect of the thermal bypass channel can be further increased. A heatpipe further enhances a distribution of heat of the thermal bypass channel so that thermal hotspots are eliminated.

In a preferred embodiment, the heatpipe is thermally connecting the at least one thermal bypass channel to a heat sink at an outer side of an enclosure of the switchgear panel. In this example the heatpipe is used as a thermal bridge between the thermal bypass channel and the heat sink. By means of the heat sink outside of the enclosure a high cooling effect of the heat sink can be achieved, so that the heat from the thermal bypass channel transported via the heat pipe to the heat sink can be effectively distributed via the heat sink to the environment. With such an arrangement a high temperature gradient between the thermal bypass channel and the heat sink can be achieved which results in an efficient cooling effect. Thus, the cooling of the switchgear panel is improved.

A preferred embodiment specifies that the thermal bypass channel is arranged in a vertical direction. Although also a horizontal arrangement is possible, a vertical arrangement of the thermal bypass channel leads, due to the gravity, to a better thermal flow in the thermal bypass channel. Accordingly, the cooling effect of such an arrangement of the thermal bypass channel is increased.

Preferably, ribs and/or fins are provided on an internal and/or external side of the thermal bypass channel. Usually, it is not possible providing fins inside the compartments to provide a better heat exchange. By using the thermal bypass channel, such fins or rips can be used in order to increase the thermal contact and exchange surface. Due to the higher surface area a better cooling effect is achieved. Preferably, the fins and rips inside and/or outside are arranged in flow direction, in order to avoid a disturbance of the thermal flow. Such an arrangement also increases the flow velocity inside and outside the channel so that the heat exchange and therewith the cooling effect is enhanced.

In a further aspect, the inlet of the thermal bypass channel is connected to the compartment comprising the highest temperature of the compartments, wherein the outlet of the thermal bypass channel is connected to the compartment comprising the lowest temperature of the compartments. With such an arrangement of the inlet and the outlet, a high temperature gradient between the inlet and the outlet can be achieved. This leads to a high thermal flow between the inlet and the outlet of the thermal bypass channel, so that the most effective cooling effect is achieved with this arrangement. Further, the temperature inside the switchgear panel can be distributed more equally.

Preferably, the thermal bypass channel comprises an internal diameter in the range of 50-200mm. More preferably, the diameter is in the range of 75-125mm. The internal diameter is the diameter inside the thermal bypass channel which can be effectively used by the thermal flow. With a diameter higher than the lower range a sufficient cooling effect is achieved. Further, with the diameter lower than the upper range it is possible to establish a thermal flow inside the thermal bypass channel. In addition, with a thermal bypass channel, which has a diameter smaller than the upper limit, the space requirement for the switchgear panel is low. With a thermal bypass channel having a diameter in this range, an optimum of cooling efficiency and space requirement is achieved.

The above aspects and examples will become apparent from and be elucidated with reference to the embodiments described hereinafter.

### BRIEF DESCRIPTION OF THE DRAWINGS

The subject matter of the present disclosure will be explained in more details in the following description illustrated in the drawings, in which:
- Figure 1: Perspective view of a switchgear panel with a thermal bypass channel according to an embodiment,
- Figure 2: Perspective view of a switchgear panel with a thermal bypass channel according to a further embodiment,
- Figure 3: Perspective view of a switchgear panel with a thermal bypass channel according to another embodiment,
- Figure 4: Cross section of the thermal bypass channel, and
- Figure 5: Cross section of compartments comprising the thermal bypass channel with a heat pipe.

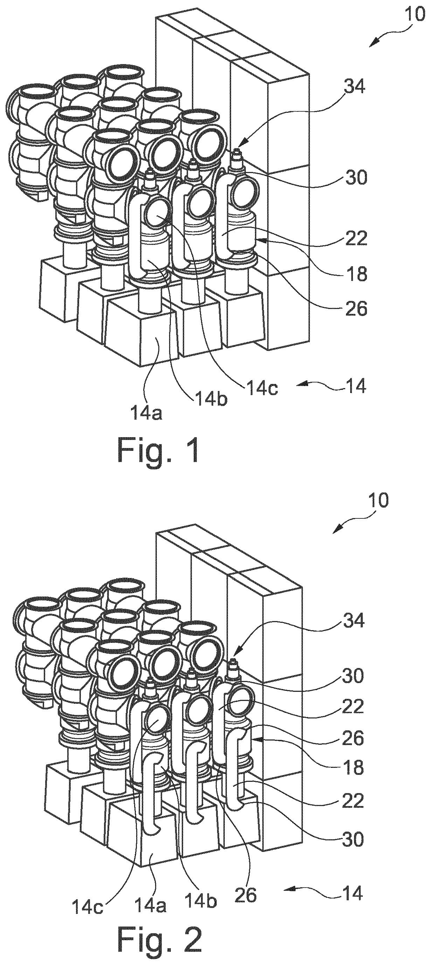

Figure 1 shows a perspective view of a switchgear panel 10 according to an embodiment. The switchgear panel 10 comprises a plurality of compartments 14, which are arranged in a vertical row one above the other, so that outer housings 18 of the compartments 14 are attached to each other. Further, several of these arrangements are arranged side by side. The compartments 14 in this embodiment comprises a cable compartment 14a, a vacuum interrupter compartment 14b and a busbar compartment 14c. The switchgear panel 10 further comprises a thermal bypass channel 22 comprising an inlet 26 and an outlet 30, wherein the inlet 26 and the outlet 30 are connected the outer housing 18 of the compartments 14. The thermal bypass channel 22 is formed between the inlet 26 and the outlet 30 as a tubular part.

In this embodiment, the thermal bypass channel 22 is arranged in a vertical direction. The thermal bypass channel 22 is formed as an integral part of the outer housing 18 of the compartments 14. The inlet 26 and the outlet 30 are provided to different compartments 14. In the present embodiment the inlet 26 of the thermal bypass channel 22 is provided by the vacuum interrupter compartment 14b, wherein the outlet 30 is provided by the busbar compartment 14c. Thereby, the higher temperature inside the vacuum interrupter compartment 14c, compared to the temperature of the busbar compartment 14c, is reduced via the thermal bypass channel 22. The temperatures of the compartments 14b, 14c can be more equalized. In other words, the temperature in the vacuum interrupter compartment 14b can be decreased while the temperature in the busbar compartment 14c is increased.

Although, figure 1 merely shows one thermal bypass channel 22 for each phase 34 of the switchgear panel 10, each phase 34 can comprise more than one thermal bypass channel 22. Such an embodiment is shown in figure 2. In this figure two thermal bypass channels 22 are provided to each phase 34. Additionally, to the embodiment shown in figure 1, in this embodiment a further thermal bypass channel 22 is provided between the vacuum interrupter compartment 14b and the cable compartment 14a. With the second thermal bypass channel 22 a further cooling effect is achieved for the vacuum interrupter compartment 14b.

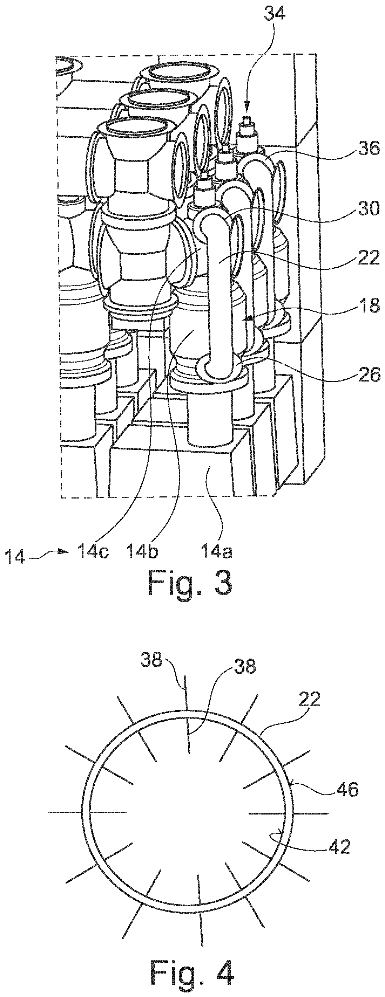

Figure 3 shows a perspective view of a switchgear panel 10 with the thermal bypass channel 22 according to another embodiment. The embodiment according to this figure differ to the embodiment shown in figures 1 and 2, in that the thermal bypass channel 22 is not provided as an integral part of the outer housing 18. In this embodiment the thermal bypass channel 22 comprises flanges 36, which are attached to a respective flange 36 of the compartment 14. The thermal bypass channel 22 therefore is provided as a separate part to the outer housing 18 of the compartments 14. With such an arrangement it is possible to manufacture the switchgear panel 10 in a cheaper way than building the outer housing 18 together with the thermal bypass channel 22 as one part.

In figure 4 a cross section of the thermal bypass channel 22 is shown. The figure shows that a plurality of fins 38 is arranged on an internal side 42 of the thermal bypass channel 22. The fins 38 extent in a longitudinal direction of the thermal bypass channel 22, so that a fluid flow in the channel 22 is not disturbed by the fins 38. The thermal bypass channel 22 further comprises a plurality of fins 38 which is arranged on an external side 46. Also these fins 38 extent in a longitudinal direction of the thermal bypass channel 22. As the thermal bypass channel 22 is arranged in a vertical direction a vertical thermal fluid flow on an external side 46 of the thermal bypass channel 22 is not disturbed by the fins 38. The fins 38 on the internal 42 and the external side 46 have the effect that the heat exchange surface is significantly increased, so that a heat exchange between the fluid in the thermal bypass channel 22 to the environment is improved. Although, figure 4 shows fins 38 on the internal 42 and external side 46, also embodiments are possible using fins 38 either on the internal 42 or the external side 46.

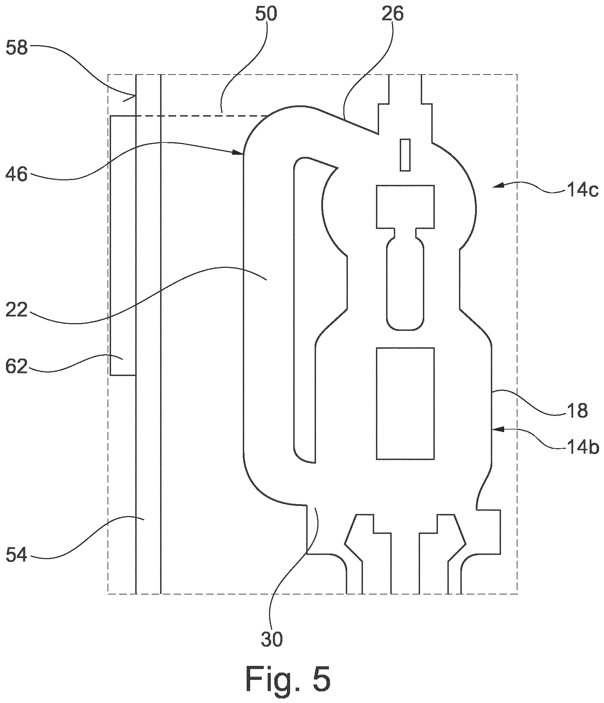

A cross section of compartments 14 comprising the thermal bypass channel 22 is shown in figure 5. In this figure the thermal bypass channel 22 and the outer housing 18 is provided as an integral part. On an external side 46 of the thermal bypass channel 22 a heat pipe 50 is arranged in order to improve the cooling of the fluid inside the thermal bypass channel 22. In the present embodiment the figure further shows an enclosure 54 of the switchgear panel 10. On an outer side 58 of this enclosure 54 a heat sink 62 is arranged. The heat pipe 50 thereby is provided between the external side 46 of the thermal bypass channel 22 and the heat sink 62 so that the heat pipe 50 thermally connects the thermal bypass channel 22 with the heat sink 62. By means of the heat pipe 50 the cooling efficiency of the thermal bypass channel is improved. The heat sink 62 on the outer side 58 of the enclosure 54 further cools the fluid flow inside the enclosure 54, cooling the thermal bypass channel 22 on the external side 46 of this channel 22, so that thereby the cooling of the thermal bypass channel 22 is further improved.

### List of reference numbers

- 10: switchgear panel
- 14: compartment
- 14a: cable compartment
- 14b: vacuum interrupter compartment
- 14c: busbar compartment
- 18: outer housing
- 22: thermal bypass channel
- 26: inlet
- 30: outlet
- 34: phase
- 36: flange
- 38: fin
- 42: internal side
- 46: external side
- 50: heat pipe
- 54: enclosure
- 58: outer side
- 62: heat sink

## Claims

1. Switchgear panel (10) comprising a plurality of compartments (14), each compartment (14) comprises an outer housing (18), wherein at least one thermal bypass channel (22) is provided comprising an inlet (26) and an outlet (30), wherein the inlet (26) and the outlet (30) are fluidically connected to the housing (18) of at least one compartment (14) of the switchgear panel (10), and the inlet (26) is arranged to a region with a higher temperature than the temperature of the region where the outlet (30) is connected to, so that the region at the inlet (26) is cooled by the thermal bypass channel (22).

2. Switchgear panel (10) according to claim 1, wherein the thermal bypass channel (22) is an integral part of the outer housing (18).

3. Switchgear panel (10) according to claim 2, wherein the thermal bypass channel (22) is integrated to walls of the outer housing (18).

4. Switchgear panel (10) according to claim 1, wherein the inlet (26) and/or the outlet (30) of the thermal bypass channel (22) is connected via flanges (36) to the outer housing (18) of at least one compartment (14) of the switchgear panel (10).

5. Switchgear panel (10) according to one of the preceding claims, wherein a plurality of thermal bypass channels (22) is arranged.

6. Switchgear panel (10) according to one of the preceding claims, wherein at an external side (46) of the thermal bypass channel (22) at least one heatpipe (50) is arranged.

7. Switchgear panel (10) according to claim 6, wherein the heatpipe is thermally connecting the at least one thermal bypass channel (22) to a heat sink (62) at an outer side (58) of an enclosure (54) of the switchgear panel (10).

8. Switchgear panel (10) according to one of the preceding claims, wherein the thermal bypass channel (22) is arranged in a vertical direction.

9. Switchgear panel (10) according to one of the preceding claims, wherein ribs and/or fins (38) are provided on an internal (42) and/or external side (46) of the thermal bypass channel (22).

10. Switchgear panel (10) according to one of the preceding claims, wherein the inlet (26) of the thermal bypass channel (22) is connected to the compartment (14) comprising the highest temperature of the compartments (14), wherein the outlet (30) of the thermal bypass channel (22) is connected to the compartment (14) comprising the lowest temperature of the compartments (14).

11. Switchgear panel (10) according to one of the preceding claims, wherein the thermal bypass channel (22) comprises an internal diameter in the range of 50-200mm.
